# EUROPÄISCHE PATENTSCHRIFT

(11) **EP 2 754 232 B1**
(45) Veröffentlichungstag und Bekanntmachung des Hinweises auf die Patenterteilung: **09.02.2022**
(21) Anmeldenummer: 12740593.4
(22) Anmeldetag: 27.07.2012
(51) Int. Cl.: H02K 33/18, H01F 7/11, H01F 7/13

(54) **AKTOR**
ACTUATOR
ACTIONNEUR

(30) Priorität: 06.09.2011 DE 102011053289
(43) Veröffentlichungstag der Anmeldung: 16.07.2014
(73) Patentinhaber: ContiTech Vibration Control GmbH, 30165 Hannover (DE)
(72) Erfinder: GENDERJAHN, Robert, 30161 Hannover (DE); PREUSSLER, Stefan, 31535 Neustadt (DE); KARKOSCH, Hans-Jürgen, 30966 Hemmingen (DE); MARIENFELD, Peter-Michael, 31608 Marklohe (DE)
(74) Vertreter: Continental Corporation
(86) Internationale Anmeldenummer: PCT/EP2012/064777
(87) Internationale Veröffentlichungsnummer: WO 2013/034364

(56) Entgegenhaltungen:
- EP-A2- 1 538 732
- DE-A1- 19 639 117
- DE-C2- 19 839 464
- FR-A1- 2 940 500
- JP-A- 2004 140 901
- JP-A- 2005 294 683
- JP-A- 2009 273 224
- US-A- 1 872 369
- US-A- 2 781 461

## Beschreibung

Die Erfindung betrifft einen Aktor mit einer elektrisch leitenden Spule gemäß dem Oberbegriff des Anspruchs 1.

Ein derartiger Aktor ist beispielsweise aus der DE 198 39 464 C2 bekannt. Dieser Aktor weist eine elektrisch leitende Spule auf, die eine Längsachse und eine Mehrzahl von Windungen aufweist, und wenigstens einen Magneten, der von den Windungen der Spule in bezüglich der Längsachse L radialer Richtung R beabstandet angeordnet ist. Die Spule wird auf einer dem Magneten abgewandten Seite von einem mittleren Bereich eines ersten Leitelements und der wenigstens eine Magnet auf einer den Windungen der Spule abgewandten Seite von einem mittleren Bereich eines zweiten Leitelements zumindest teilweise überdeckt. Dabei überragen das erste Leitelement die Spule und das zweite Leitelement den wenigstens einen Magneten in bezüglich der Längsachse L axialer Richtung und weisen dort jeweils kragenartige Vorsprünge auf. Derartige Aktoren enthalten ein schwingungsfähiges Masse-Feder-System, das zu Schwingungen angeregt wird, wenn durch die Windungen der elektrisch leitfähigen Spule ein Wechselstrom getrieben wird.

Der wenigstens eine Magnet weist eine Magnetisierung auf, deren Magnetisierungsrichtung im Idealfall senkrecht auf der Längsachse der Spule steht. Wird die Spule nun von einem Strom durchflossen, wirkt eine Lorentzkraft in Richtung der Längsachse der Spule. Wie in der DE 198 39 464 C2 beschrieben, entsteht durch das Zusammenwirken der aus den kragenartigen Vorsprüngen des ersten Leitelements austretenden magnetischen Feldlinien und dem zweiten Leitelement bzw. der Magnetisierung des Magneten, der vorteilhafterweise ebenfalls aus einem Material hoher Permeabilität besteht, eine weitere Kraft, die in die gleiche Richtung wirkt, wie die beschriebene Lorentzkraft. Da die magnetischen Feldlinien durch das erste und das zweite Leitelement in bestimmte Richtungen geleitet werden, werden beide Bauteile vorliegend Leitelement genannt.

Bei einem gattungsgemäßen Aktor ist entweder die Spule mit dem ersten Leitelement oder der Magnet mit dem zweiten Leitelement federnd gelagert, während die jeweils andere Baugruppe statisch gelagert ist. Durchfließt die Spule nun ein Strom, kommt es durch die genannten Kräfte zu einer Verschiebung der federnd gelagerten Baugruppe und somit zu einer Bewegung des Aktors. Auf diese Weise können beispielsweise Ventile geöffnet oder geschlossen werden.

Durchfließt die Spule statt des Gleichstroms ein Wechselstrom, dreht sich die Richtung der wirkenden Kräfte mit der Stromflussrichtung um. Auf diese Weise wird die federnd gelagerte Baugruppe in Schwingungen versetzt. Durch geschickte Wahl von Amplitude, Frequenz und Phase des angelegten Wechselstromes kann die Schwingung des Aktors sehr genau gesteuert werden. Auf diese Weise können beispielsweise Schwingungen erzeugt oder bereits bestehende Schwingungen mit einer gegenphasigen Schwingung überlagert und so kompensiert werden.

Nachteilig ist, dass die mit einem solchen Aktor gemäß dem Stand der Technik erzielbare Erregerkraft bezogen auf das dafür nötige Bauvolumen relativ gering ist.

Nachteilig ist auch, dass der nutzbare Frequenzbereich, in dem ein solcher Aktor mit Wechselstrom betrieben werden kann, Einschränkungen unterliegt. Einerseits kann die erste Eigenfrequenz des Systems, die die niedrigste Frequenz ist, bei der der Aktor betrieben werden kann, nicht zu kleineren Frequenzen hin verschoben werden. Andererseits ist der Arbeitsbereich im höher frequenten Bereich aufgrund des geringen Spulenbauraumes und des damit verbundenen Einsatzes von Spulen mit geringem Drahtdurchmesser begrenzt.

Nachteilig ist ferner bei Verwendung von Wechselstrom, dass mit zunehmender Frequenz des Stromes der induktive Blindwiderstand der Spule und somit auch der Gesamtscheinwiderstand ansteigen. Bei einer vorgegebenen Spannung von z.B. 12 V, wie sie im Bordnetz eines typischen PKW vorherrscht, reduziert sich somit die Höhe des treibbaren Stroms in Abhängigkeit von u.a. der Induktivität und des Ohmschen Widerstands der Spule sowie der Betriebsfrequenz des Aktors. Dabei liegt der wesentliche Nachteil vorrangig in der hohen Induktivität der verwendeten Spule, die sich mit steigender Frequenz und durch den umgebenden "Eisenmantel" zunehmend negativ auf die Leistungsfähigkeit des Aktors, d.h. die erzielbare dynamische Kraft bei bestimmter Betriebsfrequenz, auswirkt

Der Erfindung liegt folglich die Aufgabe zugrunde, einen gattungsgemäßen Aktor so weiter zu entwickeln, dass das Betriebsverhalten des Aktors beeinflusst und abgestimmt werden kann, um die zuvor genannten Nachteile zu überwinden, insbesondere dass ein möglichst lineares Betriebsverhalten bei gleichzeitig hoher Kraftdichte und insbesondere großem Frequenz-Arbeitsbereich erreicht wird.

Die Aufgabe wird erfindungsgemäß durch die Merkmale des kennzeichnenden Teils des Anspruchs 1 gelöst. Vorteilhafte Weiterbildungen sind in den Unteransprüchen beschrieben.

Somit betrifft die vorliegende Erfindung einen Aktor mit wenigstens einer elektrisch leitenden Spule, die eine Längsachse L und eine Mehrzahl von Windungen aufweist, und wenigstens einem Magneten, der von den Windungen der Spule in bezüglich der Längsachse L radialer Richtung R beabstandet angeordnet ist. Die wenigstens eine Spule wird auf einer dem Magneten abgewandten Seite von einem mittleren Bereich eines ersten Leitelements und der wenigstens eine Magnet auf einer den Windungen der wenigstens einen Spule abgewandten Seite von einem mittleren Bereich eines zweiten Leitelements zumindest teilweise überdeckt. Das erste Leitelement überragt die wenigstens eine Spule und das zweite Leitelement überragt den wenigstens einen Magneten in bezüglich der Längsachse L axialer Richtung und weist dort jeweils kragenartige Vorsprünge auf. Die wenigstens eine Spule weist wenigstens einen ersten Windungsbereich und einen zweiten Windungsbereich auf.

Der Erfindung liegt die Erkenntnis zugrunde, mehrere elektrisch leitende Spulen bzw. Windungsbereiche wenigstens einer Spule zu verwenden, um das Betriebsverhalten des Aktors gezielt beeinflussen und abstimmen zu können. Anders formuliert werden durch die Unterteilung der bisher lediglich einen Spulen bei bekannten Aktoren in wenigstens zwei Spulen bzw. zwei Windungsbereiche wenigstens einer Spule Möglichkeiten zur Beeinflussung und Abstimmung des Betriebsverhaltens des Aktors geschaffen, die bei der Verwendung einer einzigen Spule mit einem einzigen Windungsbereich nicht gegeben sind. Unter einer Spule mit zwei Windungsbereichen sind im Sinne dieser Erfindung auch wenigstens zwei separate Spulen zu verstehen, die gemeinsam der Anregung eines Aktors dienen und daher eine gemeinsame Aktorspule bilden, unabhängig von ihrer konstruktiven Ausgestaltung.

Zu diesen Möglichkeiten der Beeinflussung und Abstimmung des Betriebsverhaltens des Aktors gehören die Ausgestaltung der Anzahl der Windungen pro Windungsbereich oder auch die Ausgestaltung des Querschnitts (Durchmessers) der Windungen pro Windungsbereich. Ebenso kann das Betriebsverhalten des Aktors durch die Speisung der Spulen bzw. Windungsbereiche beeinflusst werden, z.B. durch die Speisung mit unterschiedlichen Amplituden, Frequenzen und bzw. oder Phasen.

Durch diese erfindungsgemäßen Möglichkeiten zur Beeinflussung und Abstimmung des Betriebsverhaltens des Aktors kann z.B. eine Reduzierung der Induktivität des Spulensystems bzw. des Aktors erreicht werden. Ferner bietet sich die Möglichkeit der Erweiterung des Betriebs-Frequenz-Bereiches des Aktors. Es kann eine Erhöhung der Aktorkraft erreicht werden, insbesondere bei hohen Frequenzen. Auch kann eine Erhöhung der Kraftdichte, d.h. einer größeren Erregerkraft bezogen auf das Bauvolumen des Aktors, insbesondere bei hohen Frequenzen bewirkt werden. Auch ist die gezielte Abstimmung des Aktors auf mehrere spezielle Frequenzbereiche möglich.

Dabei sind die beiden Windungsbereiche wenigstens voneinander und gegenüber dem Leitelement elektrisch isoliert ausgeführt ebenso wie die Windungen jedes Windungsbereichs untereinander elektrisch isoliert ausgeführt sind. Dies bedeutet, dass die Windungen der beiden Windungsbereiche im Bereich der Spule keinen elektrischen Kontakt zueinander haben, sofern die Speisung von außerhalb der Spule bzw. des Aktors erfolgt. So können z.B. die Windungen der beiden Windungsbereiche aneinander anliegen, d.h. die Windungen der beiden Windungsbereiche bzw. die Isolation der jeweiligen Windungsdrähte berühren einander. Auch können die Windungsbereiche ineinander übergehen, d.h. die Spule weist wenigstens einen Bereich in bezüglich der Längsachse L axialer Richtung und bzw. oder bezüglich der Längsachse L radialer Richtung R auf, in dem Windungen beider Windungsbereiche angeordnet sind. Dabei kann zumindest ein Windungsbereich auch Windungen aufweisen, die außerhalb dieses gemeinsamen Bereichs angeordnet sind. Es ist auch möglich, dass die beiden Windungsbereiche durch ein Abstandselement in bezüglich der Längsachse L axialer Richtung und bzw. oder bezüglich der Längsachse L radialer Richtung R beabstandet angeordnet sind. Dieses Abstandselement trennt dann die beiden Windungsbereiche durch z.B. eine Folie oder Materialschicht, die vorzugsweise nicht oder nur geringfügig magnetisch leitend ist.

Erfindungsgemäß weisen der erste Windungsbereich und der zweite Windungsbereich eine unterschiedliche Anzahl von Windungen auf.

Den ersten und zweiten Windungsbereich mit einer unterschiedlichen Anzahl von Windungen vorzusehen ist vorteilhaft, weil hierdurch das Betriebsverhalten des Aktors über die Ausgestaltung der Spule beeinflusst werden kann. So können hierdurch die beiden Windungsbereich jeweils auf einen anderen Frequenzbereich der Erregung abgestimmt werden.

Erfindungsgemäß sind die Querschnitte der Windungen des ersten Windungsbereichs und des zweiten Windungsbereichs unterschiedlich.

Beide Windungsbereiche mit Windungen mit unterschiedlichen Drahtquerschnitten vorzusehen ist vorteilhaft, weil hierdurch das Betriebsverhalten des Aktors über die Ausgestaltung der Spule beeinflusst werden kann. So können hierdurch die beiden Windungsbereich jeweils auf einen anderen Frequenzbereich der Erregung abgestimmt werden.

Erfindungsgemäß werden der erste Windungsbereich und der zweite Windungsbereich durch jeweils eine unterschiedliche Spannungs- oder Stromquelle gespeist. Dies beinhaltet, dass beide Windungsbereiche mit identischen oder unterschiedlichen Amplituden, Frequenzen und bzw. oder Phasen gespeist werden können.

Beide Windungsbereiche durch jeweils eine unterschiedliche Spannungs- oder Stromquelle zu speisen ist vorteilhaft, weil hierdurch beide Windungsbereiche mit unterschiedlichen Spannungs- bzw. Stromstärken (Amplituden) oder auch Frequenzen betrieben werden können. Somit kann das Betriebsverhalten des Aktors über die separate Speisung bzw. Ansteuerung der Windungsbereiche der Spule beeinflusst werden kann. Insbesondere können hierdurch die beiden Windungsbereich jeweils auf einen anderen Frequenzbereich der Erregung abgestimmt werden.

Erfindungsgemäß weist der erste Windungsbereich eine größere Anzahl von Windungen auf als der zweite Windungsbereich. Der erste Windungsbereich weist Windungen mit einem geringeren Querschnitt auf als die Windungen des zweiten Windungsbereichs. Der erste Windungsbereich wird mit einer niedrigeren Frequenz betrieben als der zweite Windungsbereich.

In dieser bevorzugten erfindungsgemäßen Ausgestaltung werden wenigstens zwei nichtidentische, nicht-parallelgeschaltete (jeweils unabhängig gespeiste) Spulen bzw. Windungsbereiche wenigstens einer gemeinsamen Spule mittels jeweils einer unterschiedlichen Ansteuerung bzw. Speisung in unterschiedlichen Frequenzbereichen betrieben. Auf diese Weise ist die erste Spule bzw. der erste Windungsbereich mit vielen Windungen und dünnem Drahtquerschnitt auf die Erzeugung hoher Aktorkräfte bei niedrigen Frequenzen und die zweite Spule bzw. der zweite Windungsbereich mit wenigen Windungen auf die Erzeugung von Aktorkräften auch bei sehr hohen Frequenzen abgestimmt.

Gemäß einem Aspekt der Erfindung besteht das erste Leitelement und bzw. oder das zweite Leitelement aus einem weichmagnetischen Pulververbundwerkstoff. Pulververbundwerkstoffe, so genannte soft magnetic composites (SMC), bestehen aus einem Pulver eines Werkstoffes, der eine hohe Permeabilität aufweist. Die einzelnen Körner des Pulvers sind durch dünne Schichten beispielsweise eines Kunstharzes gegeneinander elektrisch isoliert.

Diesem bevorzugten Aspekt der Erfindung liegt die Erkenntnis zugrunde, dass durch die Verwendung eines weichmagnetischen Pulververbundwerkstoffes als zumindest eines der beiden Leitelemente die Ausdehnung dieses Leitelements, also die Bauteilstärke, deutlich reduziert werden kann. Insbesondere der mittlere Bereich des ersten und bzw. oder zweiten Leitelements ist nun deutlich dünner ausführbar, so dass hier Platz und Bauraum eingespart werden kann. Dieser kann nun dazu verwendet werden, bei gleichen Außenmaßen des Aktors mehr Spulenwindungen pro Windungsbereich der wenigstens einen Spule oder einen größeren Drahtquerschnitt bei gleicher Windungszahl pro Windungsbereich der wenigstens einen Spule vorzusehen. Durch beide Maßnahmen wird das Magnetfeld und damit die erreichbare Erregerkraft deutlich erhöht. Die geringere Bauteilstärke des ersten und bzw. oder zweiten Leitelements kann jedoch auch dazu benutzt werden, bei gleicher Spulengeometrie und gleichem Drahtquerschnitt und damit gleicher Erregerkraft das benötigte Bauvolumen zu reduzieren.

Zudem kann durch die Erhöhung des Drahtquerschnittes eines Windungsbereichs oder beider Windungsbereiche der wenigstens einen Spule der Arbeitsbereich des Aktors zu höheren Frequenzen hin verschoben werden.

Die Verwendung von weichmagnetischen Pulververbundwerkstoffen, so genannten soft magnetic composites (SMC) bietet zudem den Vorteil, dass die Herstellung im Pressverfahren, bzw. beim Sintern, erfolgt. Dadurch können sehr hohe Dichten erreicht werden und die Fertigungskosten im Vergleich zur mechanischen Bearbeitung von Eisenwerkstoffen bzw. der Herstellung von Blechpaketen stark reduziert werden. Zudem werden dadurch, dass die weichmagnetischen Pulververbundwerkstoffe aus einem Pulver eines Materials mit hoher Permeabilität bestehen und die einzelnen Pulverkörner gegenseitig durch eine dünne Isolierschicht elektrisch isoliert sind, die magnetischen Eigenschaften des ersten und bzw. oder des zweiten Leitelements weiter verbessert und die magnetischen Verluste weiter reduziert werden. Dies ist im Vergleich zu den Vorteilen, die die geringe Bauteilsausdehnung und das damit verbundene geringe Bauteilvolumen liefert, jedoch nur ein untergeordneter Effekt.

Vorteilhafterweise weist das erste Leitelement und bzw. oder das zweite Leitelement in ihrem mittleren Bereich in bezüglich der Längsachse L radialer Richtung R eine Ausdehnung auf, die kleiner ist als drei Millimeter, bevorzugt kleiner als zwei Millimeter. Im Vergleich zu Aktoren aus dem Stand der Technik kann die Wandstärke des jeweiligen Leitelements in diesem Bereich folglich teilweise mehr als halbiert werden. Dadurch entsteht zusätzlicher Bauraum, der entweder zu Maßnahmen genutzt werden kann, die die Erregerkraft erhöhen, oder als Bauraum für den fertigen Aktor eingespart werden kann.

Alternativ kann beispielsweise auch das Ummanteln der wenigstens einen Spule mit Kunststoff oder ähnlichem vorgesehen sein, ohne dass Einschränkungen hinsichtlich Windungszahl und Drahtdurchmesser hingenommen werden müssen.

Die kragenartigen Vorsprünge des ersten Leitelements weisen in einem bevorzugten Ausführungsbeispiel der vorliegenden Erfindung in bezüglich der Längsachse L axialer Richtung eine Ausdehnung d auf. Die kragenartigen Vorsprünge des zweiten Leitelements weisen in bezüglich der Längsachse L axialer Richtung eine Ausdehnung D auf, wobei sich als besonders vorteilhaft herausgestellt hat, wenn das Ausdehnungsverhältnis d/D zwischen 0,6 und 0,8 liegt. Damit wird eine optimale magnetische Steifigkeit erreicht. Zudem zeigt der Aktor ein lineares Betriebsverhalten, solange die maximale Auslenkung der federnd gelagerten Baugruppe, also entweder des ersten Leitelements mit der wenigstens einen Spule oder des wenigstens einen Magneten mit dem zweiten Leitelement, weniger als ± d/2 entlang der Längsachse L der wenigstens einen Spule beträgt.

Als besonders vorteilhaft hat sich herausgestellt, wenn sowohl das erste Leitelement als auch das zweite Leitelement aus einem weichmagnetischen Pulververbundwerkstoff besteht. Dadurch können in beiden Leitelementen die Wirbelströme und die damit verbundenen magnetischen Verluste reduziert und die Dichte erhöht und damit die erzielbare Erregerkraft gegebenenfalls angehoben werden. Zudem kann bei beiden Leitelementen der benötigte Bauraum reduziert werden.

Vorzugsweise ist der wenigstens eine Magnet ringförmig um die wenigstens eine Spule angeordnet. Durch eine rotationssymmetrische Ausgestaltung des Aktors kann die gesamte Mantelfläche der wenigstens einen Spule für die Wechselwirkung mit dem wenigstens einen Magneten verwendet werden, so dass die erreichte Erregerkraft auch in dieser Hinsicht maximiert wird. Vorzugsweise ist bei dieser Ausgestaltung des Aktors das zweite Leitelement ringförmig um den wenigstens einen Magneten angeordnet und besteht aus mehreren Teilen, insbesondere zwei Halbschalen.

Das ringförmig um den wenigstens einen Magneten angeordnete zweite Leitelement kann dabei eine rotationssymmetrische Ausgestaltung um die Längsachse der wenigstens einen Spule vervollständigen. Somit wird auch die Kraft, die durch die Wechselwirkung der aus dem Kern austretenden magnetischen Feldlinien mit dem wenigstens einen Magneten bzw. dem zweiten Leitelement hervorgerufen wird, in vollem Umfang um die wenigstens eine Spule herum genutzt und damit maximiert. In dieser Ausgestaltung befindet sich das erste Leitelement in der wenigstens einen Spule und bildet den Kern der Spule. Es ist vorzugsweise ebenfalls rotationssymmetrisch bezüglich der Längsachse L der wenigstens einen Spule ausgebildet. Das zweite Leitelement ist außen am Aktor angeordnet und bildet den Mantel des Aktors.

Alternativ zu dieser Ausgestaltung kann auch die wenigstens eine Spule ringförmig um den wenigstens einen Magneten angeordnet sein. In einer besonders bevorzugten Ausgestaltung der vorliegenden Erfindung ist dann das erste Leitelement ringförmig um die wenigstens eine Spule angeordnet und besteht aus mehreren Teilen, insbesondere zwei Halbschalen. In dieser Ausgestaltung bildet das zweite Leitelement zusammen mit dem wenigstens einen Magneten den Kern der wenigstens einen Spule und des Aktors. Das erste Leitelement bildet als äußerstes der hier beschriebenen Bauteile den Mantel des Aktors.

In beiden Ausgestaltungsformen und Anordnungen funktioniert der Aktor und die Vorteile der vorliegenden Erfindung kommen voll zum Tragen.

Durch die Herstellung des Mantels in mehreren Teilen, insbesondere aus zwei identischen bzw. symmetrischen Halbschalen aus dem Pulververbundwerkstoff wird die Fertigung vereinfacht, die Fertigungskosten reduziert und die Montage erleichtert. Es bietet sich dadurch die Möglichkeit, die wenigstens eine Spule bzw. den wenigstens einen Magneten zwischen die beiden Halbschalen zu klemmen, so dass ein sicherer Halt im System realisiert ist. Damit wird ein zusätzliches aufwändiges Verkleben oder ähnliches unnötig, wodurch die Herstellung weiter vereinfacht wird.

Vorteilhafterweise weist der wenigstens eine Magnet in bezüglich der Längsachse L axialer Richtung eine größere Ausdehnung auf als die wenigstens eine Spule. Als vorteilhaft hat sich herausgestellt, wenn der wenigstens eine Magnet die wenigstens eine Spule in bezüglich der Längsachse L axialer Richtung um 2 mm bis 5 mm, bevorzugt um 3 bis 5 mm, besonders bevorzugt um 4 mm überragt. Dies gilt vorteilhafterweise jeweils auf beiden Seiten der wenigstens einen Spule in Längsrichtung L.

Die kragenartigen Vorsprünge des ersten Leitelements überragen dabei den wenigstens einen Magneten in axialer Richtung um 1 mm bis 3 mm, bevorzugt um 2 mm. Auch dies gilt vorzugsweise auf beiden Seiten in Längsrichtung L der wenigstens einen Spule. Mit den genannten Abmessungen kann ein lineares Aktorverhalten im genannten Auslenkungsbereich der federnd gelagerten Bauteilgruppe gewährleistet werden.

Vorzugsweise ist die wenigstens eine Spule und das erste Leitelement oder der wenigstens eine Magnet und das zweite Leitelement auf wenigstens einer mehrarmigen Scheibenfeder federnd gelagert. Mit dieser Ausgestaltung werden Nachteile der im Stand der Technik eingesetzten Blattfedern hinsichtlich Steifigkeit, Linearität und Dauerfestigkeit kompensiert. Aktoren aus dem Stand der Technik besitzen zudem eine sehr große magnetische Steifigkeit entlang der Längsachse L der wenigstens einen Spule. Zur Kompensation dieser magnetischen Steifigkeit ist eine sehr große Federsteifigkeit nötig. Dies ist nachteilig für die Dauerfestigkeitseigenschafen sowie die untere Resonanzfrequenz des Systems. Durch die Überlagerung der magnetischen Steifigkeit und der Federsteifigkeit ergibt sich die Gesamtsteifigkeit des Systems. Damit das Betriebsverhalten des Aktors innerhalb der maximalen Auslenkung linear ist, muss auch die Gesamtaktorsteifigkeit linear sein.

Durch eine mehrarmige Scheibenfeder ist es möglich, ein lineares Verhalten, eine hohe Dauerfestigkeit und eine ideale Spannungsverteilung innerhalb der Feder zu ermöglichen. Damit kann die auftretende Quersteifigkeit senkrecht zur Längsachse L der wenigstens einen Spule, die durch die magnetischen Anziehungskräfte verursacht wird, aufgenommen werden, sowie die magnetische Steifigkeit entlang der Längsachse L kompensiert werden. Zudem kann bei einer mehrarmigen Scheibenfeder durch eine Änderung der Dicke der Scheibe die Federsteifigkeit für den relevanten Auslenkungsbereich einfach, schnell und verlässlich realisiert werden. Dabei werden Dauerfestigkeitseigenschaften nicht nachteilig beeinflusst. Somit kann die Modularität des Gesamtsystems hinsichtlich der Änderung der ersten Eigenfrequenz auch durch einen unkomplizierten Federaustausch realisiert werden. Ein optimaler Federwerkstoff ist zudem nicht magnetisch und korrosionsgeschützt.

Durch die verschiedenen Maßnahmen, die sich gegenseitig ergänzen und Synergieeffekte hervorrufen, kann das Betriebsverhalten verschiedenartig beeinflusst und abgestimmt, die Gesamtinduktivität bzw. der Ohmsche Gesamtwiderstand reduziert, ein lineareres Betriebsverhalten bei gleichzeitig hoher Kraftdichte und insbesondere bei einem großen Frequenz-Arbeitsbereich erreicht, die Aktorkraft auf verschiedene Frequenzbereiche der Erregerspeisung abgestimmt, die Gesamtsteifigkeit des Systems verändert, die erste Eigenfrequenz zu kleinen Frequenzen verschoben und zudem die maximale erreichbare Erregerkraft angehoben werden. Durch die Wahl des Ausdehnungsverhältnisses d/D beispielsweise kann zum einen die magnetische Steifigkeit reduziert werden. Zum anderen kann dadurch jedoch auch die notwendige Steifigkeit der eingesetzten Blattfedern herabgesetzt werden, wodurch die erste Eigenfrequenz des Systems zu kleineren Frequenzen hin verschoben wird. Durch die Wahl des Verhältnisses der Anzahl der Windungen oder Ausgestaltung des Querschnitts der Windungen zwischen den wenigstens zwei Windungsbereichen der wenigstens einen Spule lässt sich das Betriebsverhalten vielfältig beeinflussen und abstimmen, ebenso wie durch die Art der Speisung der Windungsbereiche, z.B. durch unterschiedliche Amplituden, Frequenzen und bzw. oder Phasen.

Ein Ausführungsbeispiel und weitere Vorteile der Erfindung wird nachstehend im Zusammenhang mit den folgenden Figuren erläutert. Darin zeigt:
- Fig. 1a: einen schematischen Querschnitt durch einen Aktor,
- Fig. 1b: einen schematischen Querschnitt durch einen Aktor gemäß einem Ausführungsbeispiel der vorliegenden Erfindung, und
- Fig. 2: eine Draufsicht auf eine Scheibenfeder zur Verwendung in einem Aktor gemäß dem Ausführungsbeispiel der vorliegenden Erfindung.

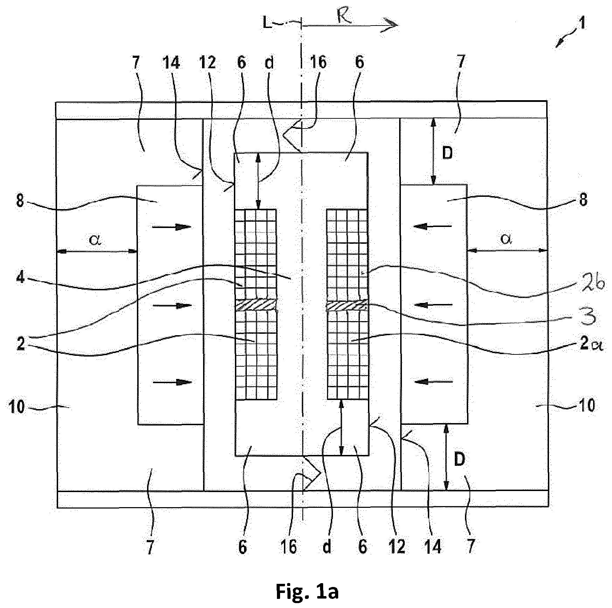

Fig. 1a zeigt einen schematischen Querschnitt durch einen Aktor 1 . Der Aktor 1 umfasst wenigstens eine Spule 2, die um ein erstes Leitelement 4 gewickelt ist und eine Längsachse L aufweist. Die Spule 2 ist in einen ersten, unteren Windungsbereich 2a und einen zweiten, oberen Windungsbereich 2b unterteilt, wobei auch weiter Unterteilungen in mehr als zwei Windungsbereiche erfindungsgemäß möglich sind. Auch können der erste Windungsbereich 2a als erste Spule 2a und der zweite Windungsbereich 2b als zweite Spule 2b einer Spulenanordnung 2 bzw. Aktorspule 2 angesehen werden.

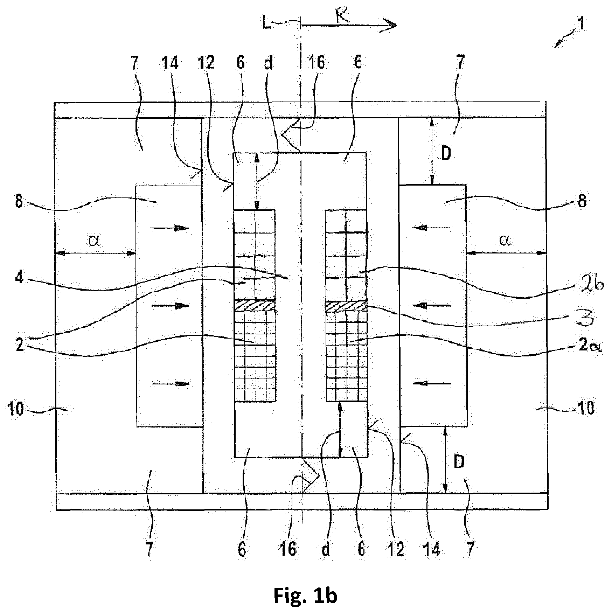

Die beiden Windungsbereiche 2a, 2b können dabei, wie beispielhaft in den Fig. 1a und 1b dargestellt, durch ein Abstandselement 3 in bezüglich der Längsachse L axialer Richtung beabstandet angeordnet sein, was für die Erfindung jedoch nicht notwendig ist.

Das erste Leitelement 4 überragt die Spule 2 in bezüglich der Längsachse L axialer Richtung auf beiden Seiten und weist dort kragenartige Vorsprünge 6 auf. Diese kragenartigen Vorsprünge 6 weisen in bezüglich der Längsachse L axialer Richtung eine Ausdehnung d auf.

In dem in Fig. 1a gezeigten Aktor 1 ist die wenigstens eine Spule 2 mit dem darin befindlichen ersten Leitelement 4 zwischen zwei Magneten 8 angeordnet. Dieser weist eine Magnetisierung auf, die in Fig. 1a durch kleine Pfeile angedeutet ist. Die Magneten 8 sind im Idealfall homogen magnetisiert und weisen eine Magnetisierungsrichtung auf, die, wie in Fig. 1a gezeigt, optimalerweise senkrecht auf der Längsachse L steht. Es ist der wenigstens eine Magnet 8 ringförmig um die wenigstens eine Spule 2 und das darin befindliche erste Leitelement 4 angeordnet.

Jeder Magnet 8 ist auf der der Spule 2 abgewandten Seite und auf zwei in bezüglich der Längsachse L axialer Richtung liegenden Seiten von einem zweiten Leitelement 10 bedeckt. Im in Fig. 1a Aktor 1 ist diese Überdeckung auf den genannten Seiten vollständig, was jedoch nicht notwendig ist.

Das zweite Leitelement 10 überragt den wenigstens einen Magneten 8 in bezüglich der Längsachse L axialer Richtung in Form von kragenartigen Vorsprüngen 7 und weist in diesem Bereich eine Ausdehnung D auf. Vorteilhafterweise ist das Verhältnis der Ausdehnung d zur Ausdehnung D kleiner als 1, insbesondere zwischen 0,6 und 0,8. Auf diese Weise kommt es zu optimalen Überdeckungen der sich gegenüberliegenden Stirnflächen 12 des ersten Leitelements 4 bzw. der kragenartigen Vorsprünge 6 und der Stirnflächen 14 des zweiten Leitelements 10 bzw. der kragenartigen Vorsprünge 7.

Wird die wenigstens eine Spule 2 als Ganzes, d.h. unabhängig von der Unterteilung in einen ersten und zweiten Windungsbereich 2a, 2b, betrachtet und von einem Strom durchflossen, werden verschiedene Kräfte hervorgerufen, die alle in die gleiche Richtung wirken. Zum einen kommt es durch den Stromfluss im magnetischen Feld der Magneten 8 zu einer Lorentzkraft, die auf die Spule 2 in Fig. 1a nach oben oder unten also entlang der Längsachse der Spule 2 wirken. Zudem wird durch den Strom durch die Spule 2 ein magnetisches Feld in dem ersten Leitelement 4 und in den kragenartigen Vorsprüngen 6 induziert. Aufgrund der Wechselwirkung dieses Magnetfeldes mit dem zweiten Leitelement 10 bzw. dem Magneten 8 werden weitere Kräfte hervorgerufen, die in die gleiche Richtung wie die Lorentzkraft wirken.

Es wird jedoch dieses "einfache" Aktorverhalten verändert und beeinflusst. So weist die wenigstens eine Spule 2 wenigstens einen ersten Windungsbereich 2a und einen zweiten Windungsbereich 2b auf, die erfindungsgemäß unterschiedlich, siehe Figur 1b, oder auch identisch, siehe Figur 1a, ausgestaltet und unterschiedlich, siehe Figur 1b, oder auch identisch gespeist, d.h. angeregt werden können.

Dabei zeigt die Fig. 1a eine schematische Darstellung zweier Windungsbereiche 2a, 2b, die identisch ausgebildete Windungen hinsichtlich z.B. der Anzahl der Windungen, ihres Windungsquerschnittes (Drahtquerschnittes), ihres Windungsabstandes untereinander (aneinander anliegend) oder auch ihrer räumlichen Anordnung um die Längsachse L aufweisen. Genauer gesagt zeigt die Fig. 1a eine Spule 2, die in zwei identische Windungsbereiche 2a, 2b unterteilt worden ist. Werden diese nun in Reihe geschaltet, d.h. die Unterbrechung der Spule 2 in die beiden Windungsbereiche 2a, 2b aufgehoben, so würde sich wieder das zuvor beschriebene Systemverhalten eines Aktors mit einer einzigen Spule 2 einstellen.

Werden jedoch die beiden Windungsbereiche 2a, 2b gemäß einer bevorzugten Ausführungsform der Erfindung zueinander parallel geschaltet und mit einer identischen Speisung (Spannung bzw. Strom) betrieben, so reduziert sich die Gesamtinduktivität bzw. der Ohmsche Gesamtwiderstand der Spule 2. Wird die wenigstens eine Spule 2 analog in mehr als zwei Windungsbereiche 2a, 2b unterteilt und diese ebenfalls parallel geschaltet, so lässt sich hierdurch die Gesamtinduktivität und der Ohmsche Gesamtwiderstand und damit der Gesamtscheinwiderstand der Spule 2 weiter reduzieren. Durch diese Reduzierung kann die Stärke der durch die wenigstens eine Spule 2 hervorgerufenen Aktorkräfte bei gleichbleibender Stärke der Speisung erhöht werden, da bei verringerten Verlusten der Wirkungsgrad entsprechend gesteigert wird.

Alternativ können die beiden Windungsbereiche 2a, 2b erfindungsgemäß auch mit unterschiedlichen Amplituden, Frequenzen und bzw. oder Phasen gespeist werden, siehe Figur 1b. Hierdurch kann das Systemverhalten z.B. auf bestimmte Frequenzbereiche abgestimmt werden.

Alternativ zu der in der Fig. 1a gezeigten identischen Ausgestaltung der beiden Windungsbereiche 2a, 2b können diese erfindungsgemäß auch unterschiedlich ausgestaltet sein, siehe Figur 1b. So kann sich z.B. ein Windungsbereich 2a, 2b in Längsrichtung L über einen größeren Bereich erstrecken als der andere Windungsbereich 2a, 2b. Zusätzlich oder alternativ kann erfindungsgemäß ein Windungsbereich 2a, 2b einen anderen Windungsquerschnitt (Drahtquerschnitt, Drahtdurchmesser) aufweisen als der andere Windungsbereich 2a, 2b. Auch kann erfindungsgemäß die Anzahl der Windungen pro Windungsbereich 2a, 2b unterschiedlich sein. Ebenso kann die Speisung durch die gleiche Quelle oder erfindungsgemäß durch unterschiedliche Quellen mit unterschiedlichen Amplituden, Frequenzen und bzw. oder Phasen erfolgen.

Fig. 1b zeigt einen schematischen Querschnitt durch einen Aktor 1 gemäß einem Ausführungsbeispiel der vorliegenden Erfindung. In dieser bevorzugten Ausführungsform weist der erste Windungsbereich 2a der wenigstens einen Spule 2 mehr Windungen auf als der zweite Windungsbereich 2b. Dafür sind die Windungen des ersten Windungsbereichs 2a mit einem geringeren Querschnitt ausgebildet als die Windungen des zweiten Windungsbereichs 2b. Ferner werden die Windungen des ersten Windungsbereichs 2a mit einer niedrigeren Frequenz gespeist bzw. angeregt als die Windungen des zweiten Windungsbereichs 2b.

Durch diese erfindungsgemäße bevorzugte Ausgestaltung der Windungen und ihrer Speisung können sowohl bei niedrigen als auch bei hohen Frequenzen hohe Kräfte im Aktor erzeugt werden. Somit kann z.B. zur Schwingungstilgung bzw. -reduzierung von niederfrequenten Schwingungen der erste Windungsbereich 2a verwendet werden, der aufgrund der Ausgestaltung seiner Windungen auch bei niederfrequenter Strom- bzw. Spannungsspeisung hohe Kräfte erzeugt, mit denen die niederfrequenten mechanischen Schwingungen wirkungsvoll reduziert werden können. Gleichzeitig kann derselbe Aktor auch hochfrequente mechanische Schwingungen wirkungsvoll reduzieren, da in diesem Fall der zweite Windungsbereich 2b mit hochfrequenter Strom- bzw. Spannungsspeisung die hierzu erforderlichen hohen Aktorkräfte erzeugt. In dazwischenliegenden Bereichen der Frequenzen der mechanischen Schwingungen können die beiden Windungsbereiche 2a, 2b gemeinsam betrieben werden, mit einer Gewichtung zwischen hoch- und niederfrequenten Schwingungsdämpfung je nach Anwendungsfall. Dabei können beide Windungsbereiche 2a, 2b grundsätzlich in allen Frequenzbereichen betrieben werden, doch entfalten sie gerade in den Frequenzbereichen, auf die sie konstruktiv abgestimmt wurden, jeweils ihre größte Wirkung, entweder einzeln oder gemeinsam betrieben.

In den in den Fig. 1a und 1b gezeigten Ausführungsbeispielen ist die wenigstens eine Spule 2 und das darin befindliche erste Leitelement 4 über Federn 16 federnd gelagert. Alternativ kann auch statt der Spule 2 mit dem ersten Leitelement 4 der Magnet 8 mit dem zweiten Leitelement 10 federnd gelagert sein.

Durch die durch den Stromfluss durch die wenigstens eine Spule 2 induzierten Kräfte wird in den in den Fig. 1a und 1b gezeigten Ausführungsbeispielen die wenigstens eine Spule 2 und das erste Leitelement 4 entlang der Längsachse L verschoben.

Dabei besteht das erste Leitelement 4 und/oder das zweite Leitelement 10 vorzugsweise aus einem weichmagnetischen Pulververbundwerkstoff. Auf diese Weise ist es möglich, die Ausdehnung a des jeweiligen Leitelements 4, 10 in bezüglich der Längsachse L radialer Richtung R zu reduzieren. Die Ausdehnung a des zweiten Leitelements, die in den Fig. 1a und 1b dargestellt ist, beträgt insbesondere weniger als 3 mm, besonders bevorzugt weniger als 2 mm. Auf diese Weise kann der für den Aktor 1 benötigte Bauraum deutlich reduziert werden. Auch durch den geringen Bauraumbedarf eines aus einem weichmagnetischen Pulververbundwerkstoff bestehenden ersten Leitelements 4 wird der für den Aktor 1 benötigte Bauraum reduziert.

Ist der Bauraum jedoch vorhanden, kann durch die sehr geringe Ausdehnung a des zweiten Leitelements 10 der von dem jeweiligen zweiten Leitelement 10 umgebene Magnet 8 in bezüglich der Längsachse L radialer Richtung R weiter von der wenigstens einen Spule 2 und dem darin befindlichen ersten Leitelement 4 entfernt angeordnet werden können. Dadurch wird der für die wenigstens eine Spule 2 zur Verfügung stehende Bauraum vergrößert, so dass beispielsweise ein Draht mit einem größeren Querschnitt oder eine größere Windungsanzahl oder sogar eine Kombination aus beidem für einen der Windungsbereiche 2a, 2b oder beide Windungsbereiche 2a, 2b verwendbar ist. Dadurch wird der Frequenzbereich, in dem der Aktor betrieben werden kann, vergrößert und bzw. oder die maximal erreichbare Erregerkraft erhöht.

Alternativ zu der beschriebenen Ausführungsform der vorliegenden Erfindung kann auch der wenigstens eine Magnet 8 innen und die wenigstens eine Spule 2 außen im Aktor angeordnet sein. In diesem Fall befindet sich der wenigstens eine Magnet 8 im Inneren der wenigstens einen Spule 2 und damit auch im Inneren der beiden Windungsbereiche 2a, 2b, bleibt jedoch von den Windungen der wenigstens einen Spule 2 in bezüglich der Längsachse L der Spule in radialer Richtung R beabstandet. Die den Windungen abgewandte Seite des Magneten 8, die von dem zweiten Leitelement 10 zumindest teilweise bedeckt wird, ist dann die Seite, die weiter von den beiden Windungsbereichen 2a, 2b der wenigstens einen Spule 2 beabstandet ist, so dass sich das zweite Leitelement 10 im Zentrum des rotationssymmetrisch aufgebauten Aktors befindet. Als besonders vorteilhaft hat sich herausgestellt, wenn die für die in Fig. 1 gezeigte Ausführungsform beschriebenen Größenverhältnisse auch in diesem Fall gelten.

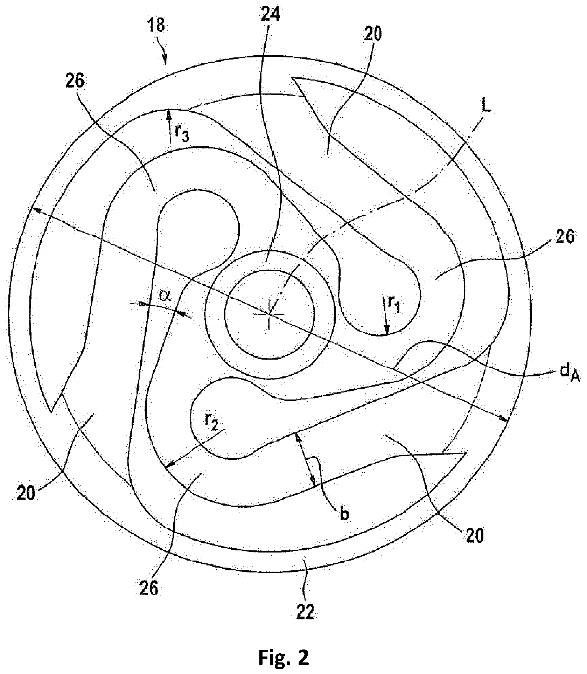

Fig. 2 zeigt die Draufsicht auf eine in einem Aktor verwendbare Scheibenfeder 18. Eine derartige mehrarmige Scheibenfeder 18 ist zur federnden Lagerung beispielsweise der wenigstens einen Spule 2 und des ersten Leitelement 4 geeignet. Die Längsachse L der Spule 2 verläuft im in Fig. 2 gezeigten Ausführungsbeispiel aus der Zeichenebene heraus. Eine derartige Scheibenfeder 18 ist in der Lage, die auftretenden Quersteifigkeiten in bezüglich der Längsachse L radialer Richtung R, die durch die magnetischen Anziehungskräfte verursacht werden, aufzunehmen. Insbesondere durch die Wechselwirkung zwischen der gegebenenfalls stromdurchflossenen Spule 2, dem darin befindlichen ersten Leitelement 4 und dem Magneten 8 treten magnetische Anziehungskräfte auf, die sich nur in dem Fall zu Null addieren, wenn die Spule 2 exakt mittig zwischen den Magneten 8 angeordnet ist. Da dies jedoch praktisch nie vollständig zu erreichen ist, sind in einem Aktor 1 immer effektive magnetische Kräfte vorhanden, die durch eine Scheibenfeder 18, wie sie in Fig. 2 gezeigt ist, aufgefangen werden können.

Eine Scheibenfeder 18 ist zudem in der Lage, die magnetische Steifigkeit in bezüglich der Längsachse L axialer Richtung zu kompensieren.

Das in Fig. 2 gezeigte Design einer Scheibenfeder 18 ist besonders vorteilhaft, da es ermöglicht, allein über die Federdicke, also die Ausdehnung der Scheibenfeder 18 senkrecht zur Zeichenebene, die Federsteifigkeit zu ändern und an die jeweiligen Gegebenheiten des Aktors 1 anzupassen. Dabei werden die Dauerfestigkeitseigenschaften der Feder nicht nachteilig beeinflusst. Sollte bei einem gegebenen Aktor 1 die erste Eigenfrequenz geändert werden müssen, kann dies einfach durch einen unkomplizierten einfach auszuführenden Federaustausch realisiert werden, wobei eine Scheibenfeder 18 einer ersten Dicke durch eine Scheibenfeder 18 einer zweiten Dicke, die größer oder kleiner als die erste Dicke sein kann, ausgetauscht wird.

Die in Fig. 2 in einer Draufsicht gezeigte Scheibenfeder 18 verfügt über drei Federarme 20, die im Abstand von 120° an einem äußeren Rand 22 der Scheibenfeder 18 angeordnet sind. Die Federarme 20 verlaufen vom äußeren Rand 22 der Scheibenfeder 18 zu einer Mittelscheibe 24, auf der das zu lagernde Bauteil gelagert wird. Im in Fig. 2 gezeigten Ausführungsbeispiel verlaufen die Federarme 20 dabei zunächst mit dem Uhrzeigersinn an der Mittelscheibe 24 vorbei, um dann in einer Kehre 26 die Richtung zu ändern und auf die Mittelscheibe 24 zuzulaufen. Natürlich können die Federarme 20 zunächst auch gegen den Uhrzeigersinn verlaufen, die Scheibenfeder 18 folglich gespiegelt ausgeführt werden.

Der Durchstoßpunkt der Längsachse L der wenigstens einen Spule 2 bildet den Mittelpunkt der Scheibenfeder 18. Der Vorteil beim in Fig. 2 gezeigten Design liegt darin, dass das Design einfach für größere und kleinere Aktoren 1 skaliert werden kann. Dabei ist die Skalierungsgröße, auf die alle anderen Maße bezogen sind, der Außendurchmesser d_{A} der Scheibenfeder 18. Die nachfolgend genannten Maße sind immer in Einheiten dieses Außendurchmessers d_{A} angegeben. Als besonders vorteilhaft hat sich herausgestellt, wenn die folgenden Maße und Abstände eingehalten werden. Ein Innenradius r₁ der Kehre 26 beträgt vorteilhafterweise 0,08 mal den Außendurchmesser d_{A}. Der Außenradius r₂ der Kehre 26 beträgt vorteilhafterweise 0,19 mal den Außendurchmesser d_{A}. Der Übergangsradius r₃ der Krümmung, mit der der Federarm 20 in den äußeren Rand 22 der Scheibenfeder 18 übergeht, beträgt vorteilhafterweise 0,16 mal den Außendurchmesser d_{A}.

Je nachdem, um welchen Winkel die Scheibenfeder 18 um den Mittelpunkt bzw. die Längsachse L der Spule 2 gedreht wird, ist die Position der Mittelpunkte der genannten Krümmungen, von denen die Radien r₁, r₂ und r₃ starten, jeweils verschieden. Die relative Position der Mittelpunkte zueinander bleibt jedoch naturgemäß gleich. Bei einer bestimmten Winkelposition lassen sich drei Mittelpunkte vorteilhafterweise durch folgende Maße beschreiben. Der Mittelpunkt einer Innenkrümmung einer Kehre 26 eines ersten Federarms 20 ist in einer Draufsicht um 0,16 Außendurchmesser d_{A} nach rechts und um 0,14 Außendurchmesser d_{A} nach unten verschoben. Gleichzeitig ist der Mittelpunkt eines Außenradius r₂ eines zweiten Federarms 20 um 0,18 Außendurchmesser d_{A} nach links und um 0,04 Außendurchmesser d_{A} nach unten verschoben. Der Mittelpunkt der Krümmung mit dem Übergangsradius r₃ des dritten Federarms 20 ist gleichzeitig um 0,11 Außendurchmesser d_{A} nach links und um 0,28 Außendurchmesser d_{A} nach oben verschoben. Auf diese Weise sind die drei Mittelpunkte relativ zueinander eindeutig bestimmt.

Jeder Federarm 20 verfügt zwischen der Kehre 26 und dem äußeren Rand 22 der Scheibenfeder 18 vorteilhafterweise über einen linearen Bereich konstanter Breite b. Diese Breite b beträgt vorteilhafterweise 0,11 Außendurchmesser d_{A}. Die Länge des geraden Bereichs des Federarms 20 beträgt an der Innenseite, also an der Seite des Federarms 20, die der Mittelscheibe 24 zugewandt ist, 0,43 Außendurchmesser d_{A}. Der Winkel α zwischen dem geraden Bereich eines ersten Federarms 20 und dem benachbarten Federarm 20 beträgt vorteilhafterweise 11,9°. Die Federdicke, also die Ausdehnung der Scheibenfeder 18 in bezüglich der Längsrichtung L axialer Richtung beträgt vorteilhafterweise zwischen 0,4 mm und 0,7 mm.

### Bezugszeichenliste

- L: Längsachse
- R: radiale Richtung, senkrecht zur Längsachse L
- d: Ausdehnung
- D: Ausdehnung
- d_{A}: Außendurchmesser
- r₁: Innenradius
- r₂: Außenradius
- r₃: Übergangsradius
- b: Breite
- α: Winkel
- 1: Aktor
- 2: Spule
- 2a: erster Windungsbereich der Spule 2
- 2b: zweiter Windungsbereich der Spule 2
- 3: Abstandselement zwischen Windungsbereichen 2a, 2b
- 4: erstes Leitelement
- 6: kragenartiger Vorsprung
- 7: kragenartiger Vorsprung
- 8: Magnet
- 10: zweites Leitelement
- 12: Stirnfläche
- 14: Stirnfläche
- 16: Feder
- 18: Scheibenfeder
- 20: Federarm
- 22: äußerer Rand
- 24: Mittelscheibe
- 26: Kehre

## Patentansprüche

1. Aktoranordnung
mit einem Aktor (1) mit
wenigstens einer elektrisch leitenden Aktorspule (2), die eine Längsachse L und eine Mehrzahl von Windungen aufweist, und
wenigstens einem Magneten (8), der von den Windungen der Aktorspule (2) in bezüglich der Längsachse L radialer Richtung R beabstandet angeordnet ist und eine Magnetisierungsrichtung aufweist, die senkrecht zur Längsachse L der Aktorspule (2) steht,
wobei die wenigstens eine Aktorspule (2) auf einer dem Magneten (8) abgewandten Seite von einem mittleren Bereich eines ersten Leitelements (4) und der wenigstens eine Magnet (8) auf einer den Windungen der wenigstens einen Aktorspule (2) abgewandten Seite von einem mittleren Bereich eines zweiten Leitelements (10) zumindest teilweise überdeckt wird,
wobei das erste Leitelement (4) die wenigstens eine Aktorspule (2) und das zweite Leitelement (10) den wenigstens einen Magneten (8) in bezüglich der Längsachse L axialer Richtung überragen und dort jeweils kragenartige Vorsprünge (6, 7) aufweisen,
wobei entweder die Aktorspule (2) mit dem ersten Leitelement (4) oder der Magnet (8) mit dem zweiten Leitelement (10) federnd gelagert ist, während die jeweils andere Baugruppe (2, 4; 8, 10) statisch gelagert ist,
wobei die wenigstens eine Aktorspule (2) wenigstens eine erste Spule (2a) und eine zweite Spule (2b) aufweist,
**dadurch gekennzeichnet, dass**
die Aktoranordnung ferner eine Aktorspeisung mit zwei unterschiedlichen Spannungs- oder Stromquellen aufweist,
wobei die erste Spule (2a) und die zweite Spule (2b) durch jeweils eine der unterschiedlichen Spannungs- oder Stromquellen gespeist werden,
wobei die erste Spule (2a) eine größere Anzahl von Windungen aufweist als die zweite Spule (2b), und
wobei die erste Spule (2a) Windungen mit einem geringeren Querschnitt aufweist als die Windungen der zweiten Spule (2b), und
wobei die erste Spule (2a) von einer ersten Spannungs- oder Stromquelle mit einer niedrigeren Frequenz betrieben wird als die zweite Spule (2b) von einer zweiten Spannungs- oder Stromquelle.

2. Aktoranordnung nach Anspruch 1,
wobei das erste Leitelement (4) und/oder das zweite Leitelement (10) aus einem weichmagnetischen Pulververbundwerkstoff besteht.

3. Aktoranordnung nach einem der vorherigen Ansprüche,
wobei das erste Leitelement (4) und/oder das zweite Leitelement (10) in ihrem mittleren Bereich in bezüglich der Längsachse L radialer Richtung R eine Ausdehnung a aufweist, die kleiner als 3 mm ist.

4. Aktoranordnung nach einem der vorherigen Ansprüche,
wobei die kragenartigen Vorsprünge (6) des ersten Leitelements (4) in bezüglich der Längsachse L axialer Richtung eine Ausdehnung d aufweisen und
die kragenartigen Vorsprünge (7) des zweiten Leitelements (10) in bezüglich der Längsachse L axialer Richtung eine Ausdehnung D aufweisen,
wobei das Ausdehnungsverhältnis d/D zwischen 0,6 und 0,8 liegt.

5. Aktoranordnung nach einem der vorstehenden Ansprüche,
wobei der wenigstens eine Magnet (8) ringförmig um die wenigstens eine Aktorspule (2) angeordnet ist.

6. Aktoranordnung nach Anspruch 5,
wobei das zweite Leitelement (10) ringförmig um den wenigstens einen Magneten (8) angeordnet ist und aus mehreren Teilen besteht.

7. Aktoranordnung nach Anspruch 5 oder 6,
wobei das zweite Leitelement (10) ringförmig um den wenigstens einen Magneten (8) angeordnet ist und aus zwei Halbschalen besteht.

8. Aktoranordnung nach einem der Ansprüche 1 bis 4,
wobei die wenigstens eine Aktorspule (2) ringförmig um den wenigstens einen Magneten (8) angeordnet ist.

9. Aktoranordnung nach Anspruch 8,
wobei das erste Leitelement (4) ringförmig um die wenigstens eine Aktorspule (2) angeordnet ist und aus mehreren Teilen besteht.

10. Aktoranordnung nach Anspruch 8 oder 9,
wobei das erste Leitelement (4) ringförmig um die wenigstens eine Aktorspule (2) angeordnet ist und aus zwei Halbschalen besteht.

11. Aktoranordnung nach einem der vorstehenden Ansprüche,
wobei der wenigstens eine Magnet (8) in bezüglich der Längsachse L axialer Richtung eine größere Ausdehnung aufweist als die wenigstens eine Aktorspule (2) und die wenigstens eine Aktorspule (2) um 2 mm bis 5 mm überragt.

12. Aktoranordnung nach einem der vorstehenden Ansprüche,
wobei die kragenartigen Vorsprünge (6) des ersten Leitelements (4) den wenigstens einen Magneten (8) in bezüglich der Längsachse L axialer Richtung um 1 mm bis 3 mm überragen.

13. Aktoranordnung nach einem der vorstehenden Ansprüche, wobei die wenigstens eine Aktorspule (2) und das erste Leitelement (4) oder der wenigstens eine Magnet (8) und das zweite Leitelement (10) auf wenigstens einer mehrarmigen Scheibenfeder (18) federnd gelagert ist.

## Claims

1. Actuator arrangement
having an actuator (1) comprising
at least one electrically conductive actuator coil (2), which has a longitudinal axis L and a plurality of turns, and
at least one magnet (8), which is arranged spaced apart from the turns of the actuator coil (2) in the radial direction R with respect to the longitudinal axis L and has a magnetization direction that is perpendicular to the longitudinal axis L of the actuator coil (2),
wherein the at least one actuator coil (2) is at least partially covered on a side remote from the magnet (8) by a central region of a first conducting element (4), and the at least one magnet (8) is at least partially covered on a side remote from the turns of the at least one actuator coil (2) by a central region of a second conducting element (10),
wherein the first conducting element (4) protrudes beyond the at least one actuator coil (2), and the second conducting element (10) protrudes beyond the at least one magnet (8), in the axial direction with respect to the longitudinal axis L, and said first and second conducting elements each have collar-like projections (6, 7) there,
wherein either the actuator coil (2) with the first conducting element (4) or the magnet (8) with the second conducting element (10) is mounted in a sprung manner, while the respective other assembly (2, 4; 8, 10) is mounted statically,
wherein the at least one actuator coil (2) has at least one first coil (2a) and one second coil (2b),
**characterized in that**
the actuator arrangement further has an actuator feed with two different voltage or current sources,
wherein the first coil (2a) and the second coil (2b) are fed by in each case one of the different voltage or current sources,
wherein the first coil (2a) has a larger number of turns than the second coil (2b), and
wherein the first coil (2a) has turns with a smaller cross section than the turns of the second coil (2b), and
wherein the first coil (2a) is operated by a first voltage or current source at a lower frequency than the second coil (2b) by a second voltage or current source.

2. Actuator arrangement according to Claim 1,
wherein the first conducting element (4) and/or the second conducting element (10) consist(s) of a soft-magnetic powder composite material.

3. Actuator arrangement according to either of the preceding claims,
wherein the first conducting element (4) and/or the second conducting element (10) has/have an extent a of less than 3 mm in the central region of said conducting element(s) in the radial direction R with respect to the longitudinal axis L.

4. Actuator arrangement according to one of the preceding claims,
wherein the collar-like projections (6) of the first conducting element (4) have an extent d in the axial direction with respect to the longitudinal axis L and
the collar-like projections (7) of the second conducting element (10) have an extent D in the axial direction with respect to the longitudinal axis L,
wherein the ratio of extent d/D is between 0.6 and 0.8.

5. Actuator arrangement according to one of the preceding claims,
wherein the at least one magnet (8) is arranged in the form of a ring around the at least one actuator coil (2) .

6. Actuator arrangement according to Claim 5,
wherein the second conducting element (10) is arranged in the form of a ring around the at least one magnet (8) and comprises a plurality of parts.

7. Actuator arrangement according to Claim 5 or 6,
wherein the second conducting element (10) is arranged in the form of a ring around the at least one magnet (8) and comprises two half-shells.

8. Actuator arrangement according to one of Claims 1 to 4,
wherein the at least one actuator coil (2) is arranged in the form of a ring around the at least one magnet (8).

9. Actuator arrangement according to Claim 8,
wherein the first conducting element (4) is arranged in the form of a ring around the at least one actuator coil (2) and comprises a plurality of parts.

10. Actuator arrangement according to Claim 8 or 9,
wherein the first conducting element (4) is arranged in the form of a ring around the at least one actuator coil (2) and comprises two half-shells.

11. Actuator arrangement according to one of the preceding claims,
wherein the at least one magnet (8) has a greater extent than the at least one actuator coil (2) in the axial direction with respect to the longitudinal axis L and protrudes beyond the at least one actuator coil (2) by 2 mm to 5 mm.

12. Actuator arrangement according to one of the preceding claims,
wherein the collar-like projections (6) of the first conducting element (4) protrude beyond the at least one magnet (8) by 1 mm to 3 mm in the axial direction with respect to the longitudinal axis L.

13. Actuator arrangement according to one of the preceding claims,
wherein the at least one actuator coil (2) and the first conducting element (4) or the at least one magnet (8) and the second conducting element (10) are mounted in a sprung manner on at least one multiple-arm spring washer (18).

## Revendications

1. Agencement d'actionneur
comprenant un actionneur (1), comprenant
au moins une bobine d'actionneur électriquement conductrice (2) qui présente un axe longitudinal L et une pluralité d'enroulements, et
au moins un aimant (8) qui est disposé à distance des enroulements de la bobine d'actionneur (2) dans la direction R radiale par rapport à l'axe longitudinal L et présente un sens de magnétisation qui est perpendiculaire à l'axe longitudinal L de la bobine d'actionneur (2),
ladite au moins une bobine d'actionneur (2) étant au moins partiellement recouverte, sur un côté détourné de l'aimant (8), par une zone centrale d'un premier élément conducteur (4), et ledit au moins un aimant (8) est au moins partiellement recouvert, sur un côté détourné des enroulements de ladite au moins une bobine d'actionneur (2), par une zone centrale d'un deuxième élément conducteur (10),
le premier élément conducteur (4) dépassant de ladite au moins une bobine d'actionneur (2) et le deuxième élément conducteur (10) dépassant dudit au moins un aimant (8) dans la direction axiale par rapport à l'axe longitudinal L et y présentent respectivement des saillies en forme de collerette (6, 7),
dans lequel soit la bobine d'actionneur (2) est montée élastique avec le premier élément conducteur (4), soit l'aimant (8) est monté élastique avec le deuxième élément conducteur (10), alors que l'autre sous-ensemble respectif (2, 4 ; 8, 10) est monté statique,
ladite au moins une bobine d'actionneur (2) présentant au moins une première bobine (2a) et une deuxième bobine (2b),
**caractérisé en ce que** l'agencement d'actionneur présente en outre une alimentation d'actionneur dotée de deux sources de tension ou de courant différentes,
la première bobine (2a) et la deuxième bobine (2b) étant alimentées respectivement par l'une des différentes sources de tension ou de courant,
la première bobine (2a) présentant un plus grand nombre d'enroulements que la deuxième bobine (2b), et
la première bobine (2a) présentant des enroulements ayant une section transversale inférieure à celle des enroulements de la deuxième bobine (2b), et
la première bobine (2a) étant actionnée par une première source de tension ou de courant à une fréquence inférieure à celle de la deuxième bobine (2b) actionnée par une deuxième source de tension ou de courant.

2. Agencement d'actionneur selon la revendication 1, dans lequel le premier élément conducteur (4) et/ou le deuxième élément conducteur (10) sont composés d'un matériau composite en poudre magnétique doux.

3. Agencement d'actionneur selon l'une quelconque des revendications précédentes, dans lequel le premier élément conducteur (4) et/ou le deuxième élément conducteur (10) présente(nt) dans leur zone centrale dans la direction R radiale par rapport à l'axe longitudinal L une extension a qui est inférieure à 3 mm.

4. Agencement d'actionneur selon l'une quelconque des revendications précédentes,
dans lequel les saillies (6) en forme de collerette du premier élément conducteur (4) présentent dans la direction axiale par rapport à l'axe longitudinal L une extension d, et
les saillies (7) en forme de collerette du deuxième élément conducteur (10) présentent dans la direction axiale par rapport à l'axe longitudinal L une extension D,
le rapport d'extension d/D étant compris entre 0,6 et 0,8.

5. Agencement d'actionneur selon l'une quelconque des revendications précédentes, dans lequel ledit au moins un aimant (8) est disposé en forme d'anneau autour de ladite au moins une bobine d'actionneur (2).

6. Agencement d'actionneur selon la revendication 5, dans lequel le deuxième élément conducteur (10) est disposé en forme d'anneau autour du au moins un aimant (8) et est composé de plusieurs parties.

7. Agencement d'actionneur selon la revendication 5 ou 6, dans lequel le deuxième élément conducteur (10) est disposé en forme d'anneau autour du au moins un aimant (8) et est composé de deux demi-coques.

8. Agencement d'actionneur selon l'une quelconque des revendications 1 à 4, dans lequel ladite au moins une bobine d'actionneur (2) est disposée en forme d'anneau autour du au moins un aimant (8).

9. Agencement d'actionneur selon la revendication 8, dans lequel le premier élément conducteur (4) est disposé en forme d'anneau autour de ladite au moins une bobine d'actionneur (2) et est composé de plusieurs parties.

10. Agencement d'actionneur selon la revendication 8 ou 9, dans lequel le premier élément conducteur (4) est disposé en forme d'anneau autour de ladite au moins une bobine d'actionneur (2) et est composé de deux demi-coques.

11. Agencement d'actionneur selon l'une quelconque des revendications précédentes, dans lequel ledit au moins un aimant (8) présente dans la direction axiale par rapport à l'axe longitudinal L une plus grande extension que ladite au moins une bobine d'actionneur (2) et dépasse de ladite au moins une bobine d'actionneur (2) de 2 mm à 5 mm.

12. Agencement d'actionneur selon l'une quelconque des revendications précédentes, dans lequel les saillies en forme de collerette (6) du premier élément conducteur (4) dépassent du au moins un aimant (8) dans la direction axiale par rapport à l'axe longitudinal L de 1 mm à 3 mm.

13. Agencement d'actionneur selon l'une quelconque des revendications précédentes, dans lequel ladite au moins une bobine d'actionneur (2) et le premier élément conducteur (4) ou ledit au moins un aimant (8) et le deuxième élément conducteur (10) sont montés élastiques sur au moins une rondelle élastique bombée à plusieurs branches (18).
